# EUROPEAN PATENT APPLICATION

(11) **EP 3 920 335 A1**
(43) Date of publication of application: **08.12.2021**
(21) Application number: 19872240.7
(22) Date of filing: 04.06.2019
(51) Int. Cl.: H01Q 21/00

(54) **MULTIPLE-INPUT MULTIPLE-OUTPUT ANTENNA AND SYSTEM**

(30) Priority: 31.01.2019 CN 201920171868 U
(71) Applicant: Shenzhen Wave Telecommunications Technologies Co., Ltd, Shenzhen, Guangdong 518102 (CN)
(72) Inventor: ZHANG, Shaolin, Shenzhen, Guangdong 518102 (CN); CUI, Licheng, Shenzhen, Guangdong 518102 (CN)
(74) Representative: Appleyard Lees IP LLP
(86) International application number: PCT/CN2019/090029
(87) International publication number: WO 2020/155498

(57) **Abstract**

The present application discloses a multi-input multi-output antenna and a system. The multi-input multi-output antenna includes a plurality of stacked oscillator layers. The oscillator layers include a supporting plate and an antenna array disposed on the supporting plate. Each of the oscillator layers is connected by a plurality of connecting members, and a spacing between the oscillator layers is at least 0.5λ which is a wavelength of center frequency of the multiple-input multiple-output antenna.

## Description

### CROSS-REFERENCE TO RELATED APPLICATIONS

This application claims priority to Chinese Patent Application No. 201920171868.6, entitled "A MULTI-INPUT MULTI-OUTPUT ANTENNA AND A SYSTEM" filed on January 31, 2019, the contents of which are expressly incorporated by reference herein in their entirety.

### TECHNICAL FIELD

The present disclosure relates to a field of antennas, and more particularly to a multi-input multi-output antenna and a system.

### BACKGROUND

The antenna is an indispensable part of any radio communication system. Although the tasks to be performed by various types of radio equipment are different, the role of the antenna in the equipment is basically the same. Any radio equipment uses radio waves to transmit information, as such, there must be a device capable of radiating or receiving electromagnetic waves. The existing antennas have single-polarized antenna, dual-polarized antenna and multi-band antenna, but these antenna structures are all two-dimensional, such that the size of the antenna is too large to realize high gain. The requirements for TX filter and power amplifier are high. Not only system cost is high, but also operators have high operating costs.

### SUMMARY

In view of this, the present application discloses a multi-input multi-output antenna and a system. The multi-input multi-output antenna can form a vertical plane beam by setting the multi-input multi-output antenna as a stereoscopic structure, thereby improving the overall gain of the antenna. Meanwhile, the configuration of the stereoscopic structure can effectively improve the space utilization efficiency, enrich the configuration of the antenna, and reduce the costs.

A multi-input multi-output antenna includes a plurality of stacked oscillator layers. The oscillator layers each include a supporting plate and an antenna array disposed on the supporting plate. Each of the oscillator layers is connected by a plurality of connecting members, and a spacing between the oscillator layers is at least 0.5λ which is a wavelength of center frequency of the multiple-input multiple-output antenna.

Preferably, the antenna array includes a plurality of dual polarization oscillators.

Preferably, there are four connecting members respectively disposed at four corners of the supporting plate.

Preferably, the connecting members are an insulating resin connecting member.

Preferably, the supporting plate is a metal supporting plate.

Preferably, dimensions of the metal supporting plates are the same.

A multi-input multi-output antenna system includes a filter, a circulator, a low noise amplifier, a receiver, a power amplifier, and a transmitter. The filter is connected to the low noise amplifier and the power amplifier via the circulator, respectively. The low noise amplifier is further connected to the receiver, the power amplifier is further connected to the transmitter. The multi-input multi-output antenna system further includes any of the multi-input multi-output antennas as above mentioned and the multi-input multi-output antenna is connected to the filter.

The present application discloses a multi-input multi-output antenna and a system according to the technical solution described above. The multi-input multi-output antenna includes a plurality of stacked oscillator layers. The oscillator layers each include a supporting plate and an antenna array disposed on the supporting plate. Each of the oscillator layers is connected by a plurality of connecting members, and a spacing between the oscillator layers is at least 0.5λ which is a wavelength of center frequency of the multiple-input multiple-output antenna. The multi-input multi-output antenna can form a vertical plane beam by setting the multi-input multi-output antenna as a stereoscopic structure, thereby improving the overall gain of the antenna. Meanwhile, the configuration of the stereoscopic structure can effectively improve the space utilization efficiency, enrich the configuration of the antenna, and reduce the costs.

### BRIEF DESCRIPTION OF THE DRAWINGS

To describe the technical solutions in the embodiments of this application or in the prior art more clearly, the following briefly introduces the accompanying drawings required for describing the embodiments or in the prior art. Apparently, the accompanying drawings in the following description are merely some embodiments of this application, and persons of ordinary skill in the art may still derive other drawings from these accompanying drawings without creative efforts.
FIG. 1 is a schematic structural diagram of a multi-input multi-output antenna according to an embodiment of the present application;
FIG. 2 is a schematic structural diagram of a multi-input multi-output antenna system according to a first embodiment of the present application; and
FIG. 3 is a schematic structural diagram of the multi-input multi-output antenna system according to a second embodiment of the present application.

### DETAILED DESCRIPTION OF THE EMBODIMENTS

The following clearly and completely describes the technical solutions in the embodiments of this application with reference to the accompanying drawings in the embodiments of this application. Apparently, the described embodiments are merely some rather than all of the embodiments of this application. Based on the embodiments of this application, all other embodiments acquired by persons of ordinary skill in the art without creative efforts fall within the protection scope of this application.

The present application provides a multi-input multi-output antenna and a system. The multi-input multi-output antenna can form a vertical plane beam by setting the multi-input multi-output antenna as a three-dimensional structure, thereby improving the overall gain of the antenna. Meanwhile, the configuration of the three-dimensional structure can effectively improve the space utilization efficiency, enrich the configuration of the antenna, and reduce the costs.

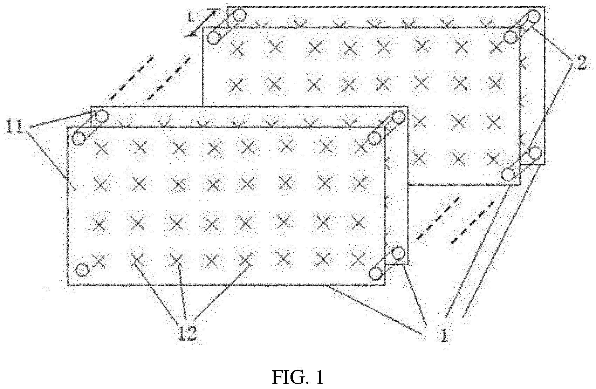

Referring to FIG. 1, the multi-input multi-output antenna provided by the present disclosure includes a plurality of stacked oscillator layers 1. Each of the oscillator layers 1 includes a supporting plate 11 and an antenna array (not shown in the figure) disposed on the supporting plate 11. Each of the oscillator layers 1 is connected by a plurality of connecting members 2, and the spacing L between the oscillator layers 1 is at least 0.5λ, where λ is the wavelength of center frequency of the multiple-input multiple-output antenna. In the present application, the antenna oscillators are arranged in three directions of an X-axis, a Y-axis and a Z-axis to form a three-dimensional array antenna structure. The multi-input multi-output antenna can form a vertical beam by setting the multi-input multi-output antenna as a stereoscopic structure, thereby improving the overall gain of the antenna. Meanwhile, the configuration of the stereoscopic structure can effectively improve the space utilization efficiency, enrich the configuration of the antenna, and reduce the costs. Preferably, the supporting plate of each oscillator layer is a metal supporting plate, and preferably, dimension of each supporting plate is same. The supporting plate can certainly be configured as needed in practical application, which is not limited in this application.

Further, each of the oscillator layers 1 is connected to adjacent one by the connecting members and it is confirmed that the spacing between adjacent oscillator layers is at least 0.5λ. It is ensured that signals between the adjacent oscillator layers 1 do not interact with each other by presetting a certain spacing L between the oscillator layers 1. By doing so performance of the multi-input and multi-output antenna of the product can be improved when the antenna is configured.

Preferably, the supporting plate 11 is in a shape of quadrilateral, so that different arrays can be freely formed when the oscillator is disposed on the supporting plate 11. Correspondingly, there are four connecting members respectively disposed at four corners of the supporting plate 11 to further secure the firmness of the connection between the oscillator layers 1. Preferably, the connecting members 2 are an insulating resin connecting members.

In a further aspect, the antenna array includes a plurality of dual polarization oscillators 12 presenting as a linear array in both the X-axis direction and the Y-axis direction. The arrangement of the dual polarization antennas can also ensure sufficient isolation even if the oscillators in different polarization directions are overlapped together. Installation space can be saved, and the size of the antenna can be further reduced.

Based on the multi-input multi-output antenna as described above, the present disclosure also correspondingly provides a multi-input multi-output antenna system including a filter 31, a circulator 32, a low noise amplifier 33, a receiver 34, a power amplifier 35, and a transmitter 36. The filter 31 is connected, via the circulator 32, to the low noise amplifier 33 and the power amplifier 35, respectively. The low noise amplifier 33 is further connected to the receiver 34, the power amplifier 35 is further connected to the transmitter 36. The multi-input multi-output antenna system further includes the multi-input multi-output antenna as described above. The multi-input multi-output antenna is connected to the filter 31.

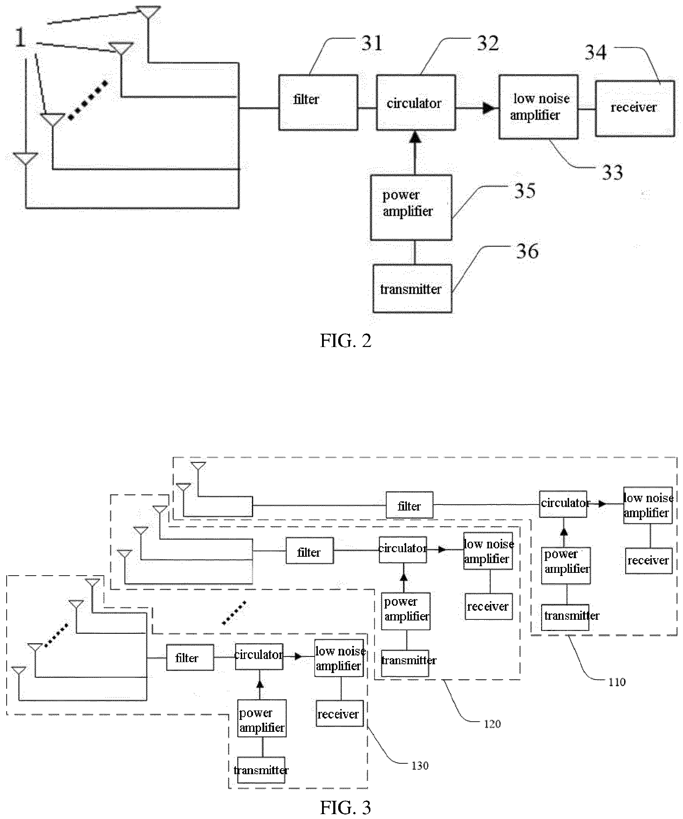

In particular, referring to FIG. 2, in the embodiment, the plurality of oscillator layers 1 of the multi-input multi-output antenna can be formed into a single stereoscopic array, that is, the plurality of oscillator layers 1 are formed into a transmitting and receiving unit. By configuring the original two-dimensional multi-input multi-output antenna system into a three-dimensional multi-input multi-output antenna system, a single beam configuration of maximum gain can be realized, in which 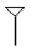 represents the oscillator layers 1. In that example, one filter 31, one circulator 32, one low noise amplifier 33, one receiver 34, one power amplifier 35 and one transmitter 36 are required only. In particular, the plurality of oscillator layers 1 forms a stereoscopic array connected to the filter 31. The filter 31 is connected to the low noise amplifier 33 and the power amplifier 35 via the circulator 32, respectively. The low noise amplifier 33 and the power amplifier 35 are also connected to the receiver 34 and the transmitter 36, respectively, to form a signal transmitting channel and a signal receiving channel, respectively. The resulting multi-input multi-output antenna system can realize maximum transmitting and receiving gain, and also can improve the utilization efficiency of the space effectively.

Further, referring to FIG. 3, in another embodiment, the plurality of oscillator layers in the multi-input multi-output antenna can form a plurality of stereoscopic arrays according to practical needs so as to form a plurality of transmitting and receiving units. The plurality of transmitting and receiving units and the corresponding filter, circulator, low noise amplifier, receiver, power amplifier, and transmitter constitute a multi-input multi-output antenna system such that the multi-input multi-output antenna system realizes configuration of a multiple beams. Preferably, each transmitting and receiving unit is independently configured with a set of filters, circulators, low noise amplifiers, receivers, power amplifiers, and transmitters to form the multiple signal transmitting channel and the signal receiving channel. Accordingly, the multi-input multi-output antenna system including the plurality of transmitting and receiving units can realize multiple beam configuration, thereby expanding the application range of the multi-input multi-output antenna system.

Preferably, several transmitting and receiving units are included in the array of the multi-input multi-output antenna system according to the embodiment. In particular, a first transmitting and receiving unit 110 includes two oscillator layers, and a second transmitting and receiving unit 120 includes three oscillator layers, in turn, a N-th transmitting and receiving unit 130 includes N + 1 oscillator layers where N is the number of transmitting and receiving units. Since the oscillator layers of each transmitting and receiving unit are different, gain effect of each transmitting and receiving unit is also different. In particular, the more the number of oscillator layers, the higher the gain. When specifically applied to a radar field, the configuration of the multiple beams of the multi-input multi-output antenna system according to the embodiment can increase the number of targets simultaneously tracked by a radar, effectively improve the function of a single radar, and effectively solve the signal coverage problem of high-rise building.

In summary, the present disclosure provides the multi-input multi-output antenna and the system. The multi-input multi-output antenna includes a plurality of stacked oscillator layers. Each oscillator layer includes a supporting plate and an antenna array disposed on the supporting plate. The oscillator layers are connected by a plurality of connecting members, and a spacing between the oscillator layers is at least 0.5λ which is a wavelength of center frequency of the multiple-input multiple-output antenna. The multi-input multi-output antenna can form a vertical plane beam by setting the multi-input multi-output antenna as a stereoscopic structure, thereby improving the overall gain of the antenna. Meanwhile, the configuration of the stereoscopic structure can effectively improve the space utilization efficiency, enrich the configuration of the antenna, and reduce the costs.

At last, it should also be noted that in the present application, relational terms such as first and second, etc. are used only to distinguish one entity or operation from another entity or operation. The existence of any such actual relationship or order between these entities or operations is not necessarily required or implied. Moreover, the term "comprising", "including" or any other variant thereof is intended to cover rather than non-exclusive inclusion such that a process, a method, an article or a equipment including a series of factors includes not only those factors, but also other factors that are not explicitly listed, or inherent factors for the process, the method, the article, or the equipment. The factor defined by the statement "including one ...... " without further limitation does not exclude the presence of another identical factor in the process, the method, the article or the equipment that includes the factor.

In the specification, the various embodiments are described in a progressive manner, and each embodiment focuses on differences from the other embodiments, and the same similar parts between the various embodiments may be referred to each other.

The above description of the disclosed embodiments enables those skilled in the art to implement or use the present application. Various modifications to these embodiments will be apparent to those skilled in the art, and the general principles defined herein may be implemented in other embodiments without departing from the spirit or scope of the present application. Accordingly, the present application will not be limited to the embodiments shown herein, but is intended to conform to the widest scope consistent with the principles and novel features disclosed herein.

## Claims

1. A multi-input multi-output antenna, comprising a plurality of stacked oscillator layers, each of the oscillator layers comprising a supporting plate and an antenna array disposed on the supporting plate, each of the oscillator layers being connected by a plurality of connecting members, and a spacing between the oscillator layers being at least 0.5λ, λ being a wavelength of center frequency of the multiple-input multiple-output antenna.

2. The multi-input multi-output antenna of claim 1, wherein the antenna array comprises a plurality of dual polarization oscillators.

3. The multi-input multi-output antenna of claim 1, wherein there are four connecting members respectively disposed at four corners of the supporting plate.

4. The multi-input multi-output antenna of claim 3, wherein the connecting members are insulating resin connecting members.

5. The multi-input multi-output antenna of claim 3, wherein the supporting plate is a metal supporting plate.

6. The multi-input multi-output antenna of claim 5, wherein dimensions of the metal supporting plates are the same.

7. A multi-input multi-output antenna system, comprising a filter, a circulator, a low noise amplifier, a receiver, a power amplifier, and a transmitter; the filter being connected to the low noise amplifier and the power amplifier via the circulator, respectively; the low noise amplifier being further connected to the receiver; the power amplifier being further connected to the transmitter, wherein the multi-input multi-output antenna system further comprises the multi-input multi-output antenna according to any one of the claims 1 to 6, the multi-input multi-output antenna is connected to the filter.
